# EUROPEAN PATENT SPECIFICATION

(11) **EP 2 198 542 B1**
(45) Date of publication and mention of the grant of the patent: **08.05.2019**
(21) Application number: 08835627.4
(22) Date of filing: 03.10.2008
(51) Int. Cl.: H04W 28/06, H04W 8/26

(54) **REDUCING SYSTEM MESSAGE OVERHEAD**
VERRINGERUNG DES NACHRICHENTSYSTEM-OVERHEAD
REDUICTION DE SURCHARGE DES MESSAGE DE SYSTÈME

(30) Priority: 04.10.2007 US 905808
(43) Date of publication of application: 23.06.2010
(73) Proprietor: HMD Global Oy, 02610 Espoo (FI)
(72) Inventor: ZHENG, Haihong, Coppell, TX 75019 (US); BOARIU, Adrian, Irving, TX 75038 (US); MAHESHWARI, Shashikant, Irving, TX 75063 (US)
(74) Representative: Papula Oy
(86) International application number: PCT/US2008/011494
(87) International publication number: WO 2009/045530

(56) References cited:
- EP-A1- 1 610 577
- KR-A- 20060 074 795
- US-A1- 2007 060 149
- US-A1- 2007 076 742
- US-A1- 2007 091 817
- HAIHONG ZHENG ET AL: "MAC PDU and GMH Design ; C80216m-08_652", IEEE DRAFT; C80216M-08_652, IEEE-SA, PISCATAWAY, NJ USA, vol. 802.16m, 8 July 2008 (2008-07-08), pages 1-19, XP017796441,
- "IEEE Standard for Local and metropolitan area networks Part 16: Air Interface for Fixed and Mobile Broadband Wireless Access Systems Amendment 2: Physical and Medium A c c e s s Control Layers for Combined Fixed and Mobile Operation in Licensed Bands and Corrigendum 1 IEEE Computer Society IEEE Micr", IEEE Std, 28 February 2006 (2006-02-28), XP055115721, Retrieved from the Internet: URL:http://ieeexplore.ieee.org/stampPDF/ge tPDF.jsp?tp=&arnumber=1603394 [retrieved on 2014-04-29]

## Description

### Field of the Invention

The present invention relates to broadband wireless access system, and in particular, to a method and apparatus to increase the system throughput by decreasing the system overhead by reducing the size of packet headers and/or control information.

### Background of the invention

IEEE Standard 802.16 defines a set of air interfaces (WirelessMan™ interfaces) for access systems that support fixed, nomadic, portable and mobile access. To meet the requirements of different types of access, two versions of air interfaces have been defined. The first is IEEE 802.16-2004 and is optimized for fixed and nomadic access. The second version is designed to support portability and mobility, and is based on an amendment of 802.16-2004 referred to as 802.16e-2005. It should be appreciated that a complete explanation and understanding of the 802.16 standard is beyond the scope of the present discussion. For more information on IEEE Standard 802.16, please refer to http://www.ieee802.org/16/.

802.16 networks typically transmit unnecessarily redundant headers and control information. Accordingly, there is a need for an improved method and apparatus to reduce the system overhead, thereby increasing the throughput in a wireless communication system.

Prior art includes US 2007/060149 A1 that discloses a transmitter in which a control channel generating unit generates burst allocation information including a receiver identification (ID) with respect to a transmission packet, a burst generating unit constructs data burst by adding a header including a traffic ID to the transmission packet, and a transmitting unit transmits the burst allocation information and the data burst. An existing connection ID (CID) is subdivided into a user ID (UID) and a traffic ID (TID). The UID and the TID are recorded in a map channel message and a medium access control (MAC) header, respectively.

Prior art further includes US 2007/091817 A1 that discloses reducing signaling overhead and power consumption in a wireless communication system. At least one packet is received from the access network (AN), each of which includes an indicator, wherein the indicator provides buffer level information and ceasing transmission of the channel quality information (CQI) of at least one non-anchor carrier to the AN if the buffer level information indicates that there is no more packet to be transmitted to an access terminal (AT).

### Summary of the Invention

The invention is characterized by the features presented in claims 1 and 4. Further embodiments are presented in the dependent claims.

Embodiments of the present invention increase system throughput by decreasing the system overhead by reducing the size of packet headers and/or control information. For example, embodiments of the present invention provide modified frames having reduced header sizes and/or reduced control information. In one embodiment, a connection identifier (CID) is divided into a CID part 1 carried on a MAP IE and a CID part 2 carried on the generic MAC-PDU headers of one or more MAC PDUs. In one embodiment, versions of RCID-IE() in MAP messages may be used to represent CID part 1. The generic MAX PDU headers (GMH) of the MAC PDUs may optionally have different MAC header formats according to the length of CID part 1. While the CID part 1 is typically the same for all MAC PDUs in a frame transmission, a frame may alternatively have MAC PDUs with two or more different CID parts 2.

In another embodiment of the present invention, the type header field of GMH the may be shortened or removed when unnecessary instead of transmitting a GMH with an empty 6 bit type field. Alternatively, a modified GMH may have a single bit, instead of a dedicated type, to signal the presence of an extended type sub-header field.

In another embodiment of the present invention, the MAC PDU may use a shorter connection index instead of a CID. For example, instead of the CID, a shorter connection index may be used in the GMH of a MAC PDU. Alternatively, a frame having multiple modified MAC PDUs may have a MAC PDU with a connection index mask and subsequent MAC PDU shaving no CID or connection index.

### Brief Description of the Drawings

The above and other objects, features and advantages of certain exemplary embodiments of the present invention will be more apparent from the following detailed description taken in conjunction with the accompanying drawings in which:
Figure 1A (PRIOR ART) depicts a 802.16 communication system;
Figure 1B (PRIOR ART) depicts the layers in the 802.16 communication system of Figure 1A;
Figure 2 (PRIOR ART) depicts a schematic illustration of a 802.16 TDD frame structure;
Figure 3 (PRIOR ART) depicts a schematic illustration of a 802.16 TDD downlink sub-frame structure;
Figure 4 (PRIOR ART) depicts a schematic illustration of a 802.16 TDD uplink sub-frame structure;
Figure 5 (PRIOR ART) depicts a schematic illustration of a 802.16 MAC PDU format used in the sub-frame structures of Figures 3 and 4;
Figure 6 (PRIOR ART) depicts a schematic illustration of a generic MAC header format used in the MAC PDU of Figure 5;
Figure 7 (PRIOR ART) depicts a schematic illustration of a bandwidth request (BR) header format;
Figure 8 depicts a schematic illustration of a modified PHY burst with first and second connection identifier (CID) parts in accordance with embodiments of the present invention;
Figures 9 and 10 depict versions of RCID-IE() in MAP messages used to represent CID part1 in modified PHY burst in accordance with embodiments of the present invention;
Figures 11a and 11b depict MAC PDUs of different MAC header formats according to the length of CID part 1 in accordance with embodiments of the present invention;
Figure 12 depicts a PHY burst with multiple MAC PDUs with different CID parts 2 in accordance with embodiments of the present invention;
Figure 13 depicts a table for reducing the type header field of a generic MAX PDU header (GMH) in accordance with embodiments of the present invention;
Figure 14 depicts a modified GMH with an extended type sub-header field in accordance with embodiments of the present invention;
Figure 15 depicts a modified GMH with a connection index instead of a CID in accordance with embodiments of the present invention;
Figure 16 depicts a PHY burst having multiple modified GMHs, each having a connection index in accordance with embodiments of the present invention;
Figures 17a and 17b depict a PHY burst having multiple modified GMHs, where the first GMH has a connection index mask and subsequent GMHs have no CID or connection index in accordance with embodiments of the present invention;
Figures 18a and 18b depict, respectively, a mobile station and a base station in accordance with embodiments of the present invention;
Figure 19 depicts a process for forming an RCID, and
Figure 19B depicts an exemplary RCID.

### Detailed Description of the Preferred Embodiments

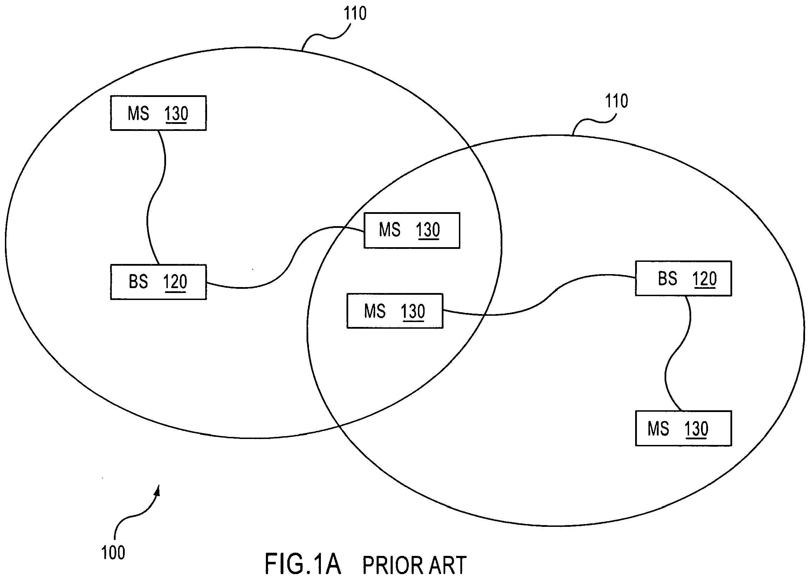

An exemplary configuration of an 802.16 communication system 100 will now be described with reference to Fig. 1A (Prior Art). The depicted communication system 100 has multiple cells 110 that each include at least one base station (BS) 120 for managing the associated cell 110. The communications system 100 further includes mobile stations (MS), also called subscriber stations (SS), 130 that are each associated with one or more of the cells 110. It should be appreciated that the particular assignment of the MS 130 to a BS 110, and the interactions of the components within the communication system 100 depends on various predefined criteria and rules, as described in greater detail below.

As depicted in the communication system 100 of FIG. 1A, multiple BS 110 can be configured to form a cellular wireless network. The 802.16 standard also can be used in a point-to-point (P2P) or mesh topology, using pairs of directional antennas.

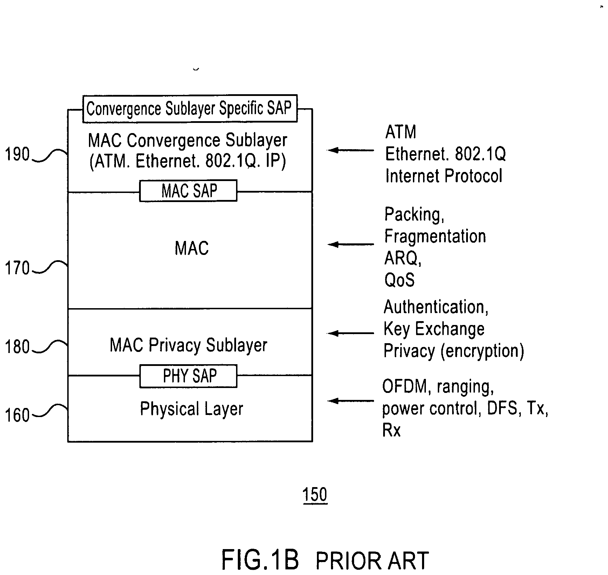

The 802.16 protocol layers are schematically depicted in FIG. 1B (Prior Art). In this layering, the 802.16 standard essentially standardizes two aspects of the air interface, the physical layer (PHY) 160 and the Media Access Control layer (MAC) 170. In 802.16, the PHY part of the specification is responsible for the on air framing, media access, and slot allocation. The MAC itself is concerned with performing the mapping from MSDUs to the MAC PDUs carried in the on air transmissions. This configuration places the division of labor between the PHY and MAC slightly higher in the stack than is common.

The 802.16 MAC 170 controls access of the BS 120 and SS 130. The timing is based on consecutive frames that are divided into slots. The size of frames and the size of individual slots within the frames can be varied on a frame-by-frame basis, under the control of a scheduler in the BS. This allows effective allocation of on air resources to meet the demands of the active connections with their granted QoS properties.

The 802.16 MAC provides a connection-oriented service to upper layers of the protocol stack. Media access control packet data units (MAC PDUs) are transmitted in on-air PHY slots. Within these MAC PDUs, MAC service data units (MSDUs) are transmitted. MSDUs are the packets transferred between the top of the MAC and the layer above. MAC PDUs are the packets transferred between the bottom of the MAC and the PHY layer below. Across MAC PDUs, MSDUs can be fragmented, and within MAC PDUs, MSDUs can be packed (aggregated). Fragments of MSDUs can be packed within a single packed MAC PDU. Then, automatic retransmission request (ARQ), described below, can be used to request the retransmission of unfragmented MSDUs and fragments of MSDUs.

Continuing with FIG. 1B, the MAC has a privacy sub-layer 180 than performs authentication, key exchange and encryption of MAC PDUs.

Through the use of flexible PHY modulation and coding options, flexible frame and slot allocations, flexible QoS mechanisms, packing, fragmentation and ARQ, the 802.16 standard can be used to deliver broadband voice and data into cells that may have a wide range of properties. This includes a wide range of population densities, a wide range of cell radii and a wide range of propagation environments.

Convergence sub-layers 190 at the top of the MAC enable Ethernet, ATM, TDM voice and IP (Internet Protocol) services to be offered over 802.16.

As described below, 802.16 is a connection oriented technology. In other words, the SS 130 cannot transmit data until a BS 120 has allocated a channel. This allows 802.16e to provide strong support for varying Quality of Service (QoS). QoS in 802.16e is supported by allocating each connection between the SS 130 and the BS 120 (called a service flow in 802.16 terminology) to a specific QoS class.

Service flow is one of the most important components of the MAC layer. It is used as a transport service to deliver packets. One service flow can be used by many packets. It is a unidirectional, which can be used by BS 120 intended for MS 130or MS 130 intended for the BS 120. It has a currently includes 32 bit identifier known as a service flow identifier (SFID). To provide QoS to packets, service flow is used. Each service flow has a defined QoS parameter set.

Service flow is of three types: provisioned, admitted and active service flow. Service flow contains optional parameters depending on the type of service flow. It contains parameter connection ID (CID) which is non null if it is an admitted or active service flow. Each data packet has associated service flow, which means that one packet has exactly one SFID as a parameter. It may contain service class name. If it contains service class name than the QoS parameter set of service flow is defined in service class. If service flow is admitted service flow or is active service flow, then it has CID.

Currently, each connection has exactly one associated service flow. It contains 16 bit Connection ID identifier and a QoS parameter Set. Similarly, each service class has exactly one associated service flow. It contains Service Class Name as an identifier and a parameter called QoS parameter Set.

The BS 120 typically contains an authorization module that is a logical function. When the MS 130 sends dynamic service change (DSC) message of provisioned, admitted or active service flow to the BS 120, as described in greater detail below, the BS 120is responsible for accepting or denying the DSC. Furthermore, the BS 120 provides limit of change for active and admitted service flows.

The 802.16 physical layer 160 supports two types of duplexing - Frequency division multiplexing (FDD) and Time division multiplexing (TDD). In FDD, one frequency channel is used to transmit downstream from a BS 120 to a MS 130 and a second frequency channel is used in the upstream direction. In TDD, a single frequency channel is used to transmit signals in both the downstream and upstream directions. On-air transmission time is divided into frames. In the case of an FDD system, there are uplink (SS 130 to BS 120) and downlink (BS 120 to SS 130) sub-frames that are time aligned on separate uplink and downlink channels. In the case of a TDD system, each frame is divided up into a downlink sub-frame and an uplink sub-frame.

As introduced above, in physical layer 160, information is generally transmitted frame by frame over multiple frames. A frame typically includes system messages and user data. A certain time period is allocated to each of the frame transmissions. Examples of communications in the physical layer 160 are now provided.

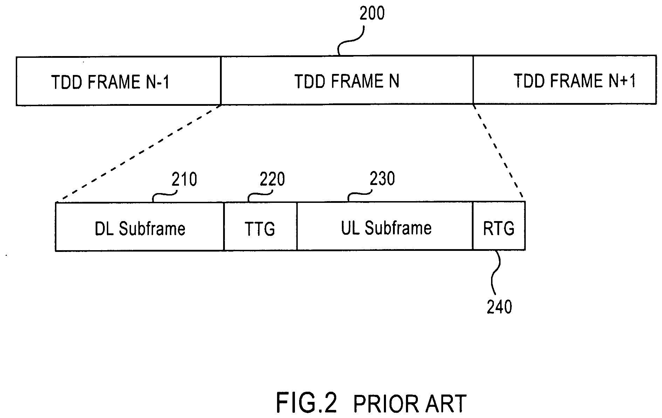

As illustrated in FIG. 2 (Prior Art), a TDD transmission generally includes multiple TDD frames 200. Each of the TDD frames 200 typically includes two subsection, a downlink (DL) sub-frame 210 and an uplink (UL) sub-frame 230. At the end of each of the sub-frames 210, 230, there is typically a gap to allow the BS to switch between transit (tx) and receive (rx) modes. A tx-rx transition gap (TTG) 220 follows the downlink transmission period, and a rx-tx transmission gap (RTG) 240 follows the uplink transmission period. The ratio between downstream traffic (DL sub-frame 210 and TTG 220) and upstream traffic (UL sub-frame 210 and RTG 220) can be adaptive or fixed. Thus, in TDD mode, the division point between uplink and downlink can also vary per frame, allowing asymmetric allocation of on air time between uplink and downlink, if required.

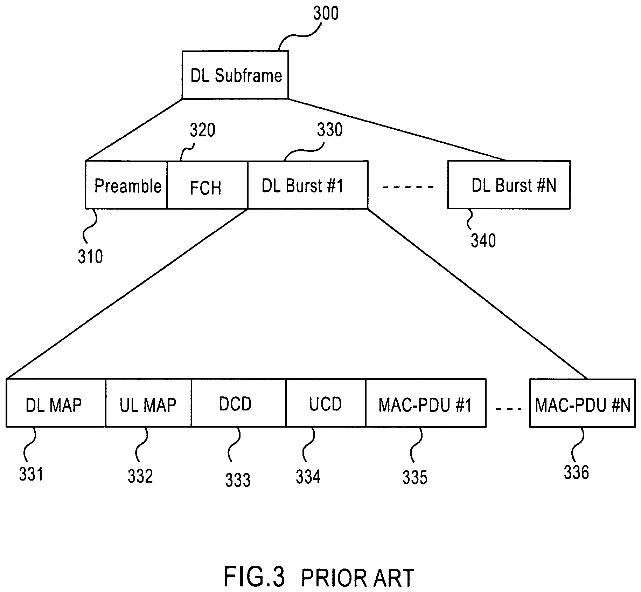

Referring now to Fig 3 (Prior Art), the DL sub-frame 300 generally includes a preamble 310, followed by a frame control header (FCH) 320, a first DL data burst 330 and multiple DL data burst 340. The DL sub-frame 300 usually starts with a preamble 310, which used for frame synchronization and equalization. The FCH 320 contains a location and a burst profile of the first DL burst 330 following the FCH 320. As 802.16 offers concatenation of several MAC packet data units (PDUs) in a single burst 330, 340, each of the bursts 330, 340 may contain additional MAC PDUs.

Continuing with FIG. 3, the first DL burst 330 in downlink may contain downlink and uplink maps (DL MAP and UL MAP) 331 and 332 and downlink and uplink channel descriptors (DCD and UCD) 333 and 334. DL-MAP, UL-MAP, UCD, DCD are all MAC management messages. DL-MAP and UL-MAP is present in every frame, but UCD and DCD are not present in every frame. The DL MAP 331 is a directory of the slot locations within the downlink sub-frame and is used to indicate the starting times and duration of the downlink bursts. The UL MAP 332 a directory of slot locations within the uplink sub-frame and indicates the starting times and duration of the uplink bursts. It is through the DL_MAP 331 and UL_MAP 332 frame descriptors that the BS 120 allocates access to the channel for both uplink and downlink. The SS 130 uses the DL_MAP 331 to identify the location of MAC PDUs within the frame and listens to each of the MAC PDUs in turn, receiving those that match a connection ID targeted at that SS 130. The DL Burst 330 may further contain additional MAC-PDUs 336.

Uplink framing is more complex, since for best effort delivery and network entry, a contention-based multiple access scheme is required in order to mediate between the SS 130 that are simultaneously seeking access to the BS 120. Based on the QoS service used for a connection, a connection may have either a guaranteed slot, may get access to a guaranteed slot on a per frame basis through polling from the BS 120 or it may have to contend for uplink access on a contention basis in a multiple access (TDMA) slot.

Contention access takes place in slots set aside for the purpose in the uplink, the contention slot for initial ranging slots and the contention slot for bandwidth requests. Each of these slots is divided into minislots. The SS 130 contending for access may use a truncated binary exponential back-off algorithm to elect which mini slot to begin its transmission in.

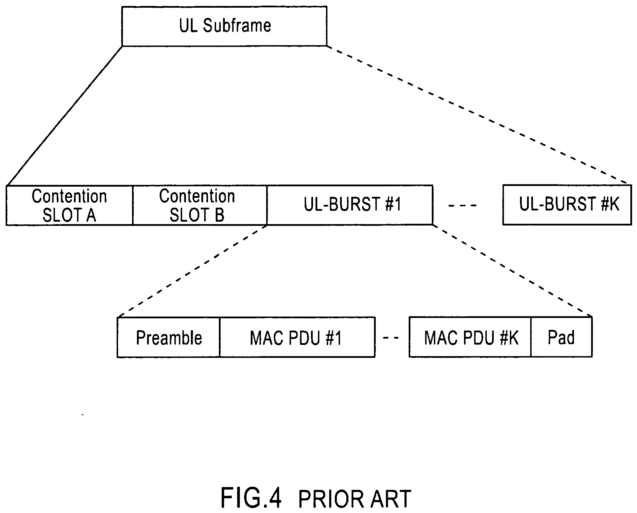

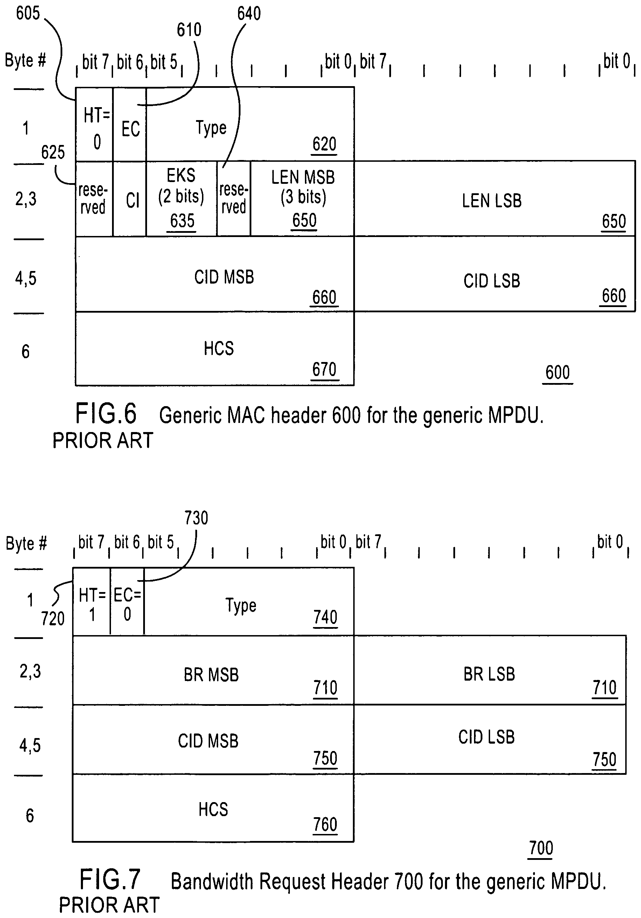

Referring now to Fig 4 (Prior Art), an uplink sub-frame 400 usually starts with a first contention slot 410 that offers to the SS 130 the opportunity for sending initial ranging and periodic ranging messages to the BS 120. The initial ranging contention slot 410 is used as part of the network entry algorithm. An SS 130 transmits a ranging request (RNG-REQ) packet in the initial ranging contention slot 410. The RNG-REQ packet has a long preamble, enabling the BS 120 to better identify the timing of the received RNG-REQ packet. If the RNG-REQ is received, the BS 120 responds a RNG-RSP (ranging response) giving timing and power adjustment information to the SS 130. The SS 130 can then adjust the timing to account for transit delays and path loss of its transmissions such that the timing and power of the signal as received at the base station aligns with transmissions from other SS 130. A second contention slot 420 offers SS 130 the opportunity for sending bandwidth request messages to the BS 120. The usage of bandwidth request messages in this contention slot offers a mechanism for achieving extremely flexible and dynamical operation of IEEE 802.16 systems, and is described in greater detail at FIG. 7 and the related text. The bandwidth request contention slot is 420 used by SS 130 to contend for access to the channel. For example, bandwidth requests are transmitted into this slot. Once a bandwidth request has been received and granted, the SS 130 may use non-contention slots allocated by the BS 120. The BS 120 thus dictates the length of the contention slots.

The optimal length for either of the contention slots 410, 420 might change based on any of a variety of parameters such as the number of SS 130, the number and type of QoS connections allocated and current activity levels.

Continuing with FIG. 4 (Prior Art), the rest of the UL sub-frame 400 is typically occupied with the transmission of user traffic, UL Burst 430 that may each include a UL preamble 431 and UL MAC PDUs 432.

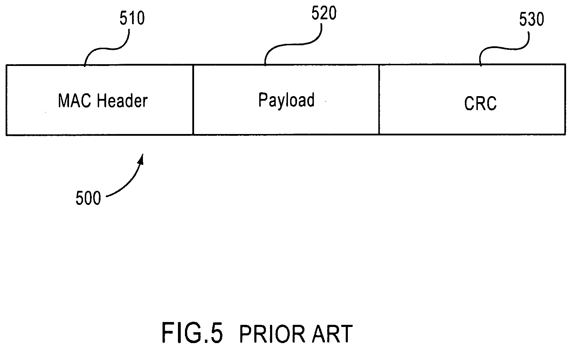

As depicted in FIG. 5 (Prior Art), the format of a MAC protocol data unit (PDU) 500 used in 802.16 communications will now be described. The MAC PDU 500 typically includes a 6 byte MAC PDU header field 510 , a payload field 520, and a cyclic redundancy check (CRC) field 530. The MAC PDU header field 510 is used to transmit header information for a MAC PDU transmission. Currently the 802.16 MAC protocol allows for two types of MAC headers, generic MAC header (GMH) and bandwidth request header (BRH), as described in greater detail below. As described in 802.16, the payload field 520 is used to transmit user data, and the CRC field 530 is used to transmit CRC bits for detecting an error in the transmission of the MAC PDU 500.

The format of a generic MAC header (GMH) 600 is depicted in FIG. 6 (Prior Art). The GHM 600 typically includes a header type ("HT") field 605 which indicates whether a generic MAC PDU or a bandwidth request message is transmitted and an encryption ("EC") field 610 that indicates whether a current transmission frame is encrypted. The HT bit 605 is typically set to 0 in order that the header is a GMH. The EC bit 610 indicates whether the frame is encrypted.

Continuing with the GHM 600 in FIG. 6, a "Type" field 620 indicates a sub-header type. Currently, the "type" field is represented with 6 bits denoting sub-header types shown in Table 1. The sub headers are used to implement the signalling necessary for the fragmentation, packing, ARQ and mesh features of the MAC.

**Table 1**

| **Type bit** | **Value** |
|---|---|
| #5 | Mesh sub-header |
| most significant bit (MSB) | 1 = present, 0 = absent |
| #4 | ARQ feedback payload 1 = present, 0 = absent |
| #3 | Extended type Indicates whether the present packing sub-header (PSH) or fragmentation sub-header (FSH) is extended for non-ARQ-enabled connections 1 = Extended 0 = Not extended For ARQ-enabled connections, this bit shall be set to 1. |
| #2 | Fragmentation sub-header (FSH) |
| | 1 = present, 0 = absent |
| #1 | Packing sub-header (PSH) |
| | 1 = present, 0 = absent |
| #0 | DL: Fast-feedback allocation sub-header (FFSH) |
| least significant bit (LSB) | UL: Grant management sub-header (GMSH) |
| | 1 = present, 0 = absent |

Continuing with the GHM 600 in FIG. 6, the extended sub-header ("ESF") field 625 is used to indicate whether an extended sub-header is present. The cyclic redundancy check (CRC) indicator ("CI") field 630 indicates whether the MAC PDU uses an optional CRC at the end of the MAC PDU., and the encryption key sequence ("EKS") field 635 indicates the kind of encryption key used in the MC PDU. The privacy sub-layer 180 allows overlapping keys so that keys can be updated without interrupting the flow of data. Furthermore, the EKS field 635 differentiates between old and new keys during an update. A reserved ("RSV") field 640 is reserved for future use.

Continuing with the GHM 600 in FIG. 6, the length ("LEN") field 650 indicate the length of the payload field of the MAC PDU. The 11 bits of the LEN field indicate the number of bytes in the MAC PDU including the header and the CRC. This bit size limits the frame length to a total of 2047 bytes.

Continuing with the GHM 600 in FIG. 6, the connection identifier ("CID") field 660 indicates which connection the MAC PDU is servicing. The functions of the CID field 660 are described in greater detail below. The header checksum ("HCS") field 670 is used to detect an error in the generic MAC PDU header field. The HCS is typically an 8-byte CRC of the first 5 bytes of the GMH 600.

802.16 defines a multiple types of CIDs, including management CIDs and data transport CIDs. The basic CID and the primary management CID are management CIDs and the transport CID is a data transport CID. The management CIDs are allocated to the MS 130 from the BS 120 without complicated service negotiations or requirements during registration since the management CIDs are basically allocated to the MS 130 for registration to the BS 120 irrespective of the service that the MS requests or uses. The transport CID, on the other hand, is allocated to the MS 130 from the BS 120 whenever the MS 130 needs a new connection. The transport CID allocation takes place when specific service class requirements are fulfilled by negotiations between the MS 130 and the BS 120.

The basic CID is specific to a registering MS 130. As long as a connection is maintained between the BS 120 and that MS 130, the basic CID can be used instead of the MAC address of the MS. The MS 130 and the BS 120 may then exchange control messages using the basic CID. Similarly, the primary management CID may be used during network entry. For example, the BS 120 may identify the MS 130 by the primary management CID during the network entry process, and significant control messages are sent/received using the primary management CID. The transport CID is generally used for actual service data transmission/reception. The connection of the service is identified by the transport CID as long as the service continues. Unlike the primary management CID and the basic CID, the transport CID is allocated on a service basis each time the MS 130 requests a service, as described above. Hence, in the case where the MS 130 requests multiple of services simultaneously, the BS 120 may allocate to the MS 130 a plurality of transport CIDs. On the other hand, the BS 120 allocates the primary management CID and basic CID are allocated to the MS 130, on a one-to-one basis, where each MS 130 on the cell 110 associated with the BS 120 receives a unique primary management CID and basic CIDs.

For BS initiated service flow setup, such as Dynamic Service Add (DSA) procedure, the BS 130 sends the contents of a DSA request message and assigns a CID to the transport connection to be established for this service flow and creates binding between this SFID and this CID. The MS 130 then responds with a DSA-response message. After this BS receives this response message, the BS creates a binding between SFID and the assigned CID.

802.16 specifications also define reduced CID, or RCID, that may be used instead of basic CID or multicast CID to reduce the size of Hybrid Automatic Repeat request (HARQ) MAP message.

HARQ is a variation of the automatic repeat-request (ARQ) error control method. ARQ is an error control method for data transmission which uses acknowledgments and timeouts to achieve reliable data transmission. An acknowledgment (ACK) is a message sent by the receiver to the transmitter to indicate that it has correctly received a data frame. A timeout is a reasonable point in time after the sender sends the data frame; if the sender does not receive an acknowledgment before the timeout, it usually retransmits the frame until it receives an acknowledgment or exceeds a predefined number of re-transmissions.

In one version of HARQ, forward error correction (FER) and ARQ are combined by encoding the data block plus error-detection information such as CRC with an error-correction code prior to transmission. When the coded data block is received, the receiver first decodes the error-correction code. If the channel quality is good enough, all transmission errors should be correctable, and the receiver can obtain the correct data block. If the channel quality is bad and not all transmission errors can be corrected, the receiver will detect this situation using the error-detection code, then the received coded data block is discarded and a retransmission is requested by the receiver by a negative acknowledgement (NAK) signal.

HARQ can be used in stop-and-wait mode or in selective repeat mode. Stop-and-wait is simpler, but waiting for the receiver's acknowledgment reduces efficiency. Thus, multiple stop-and-wait HARQ processes are often done in parallel in practice, where when one HARQ process is waiting for an acknowledgment, another process can use the channel to send some more data. The implications of these HARQ configurations are described below.

Referring back to FIG. 3, in a 802.16d/e system, CID is always present in associated the GMH 600 of every MAC PDU 335, 336 during a DL transaction. In additional the CID may also be included in the DL-MAP 331. The 802.16 specification defines CID in the DL-MAP 331 as an optional element. However, if the implementation of the BS 120 doesn't include CID in DL-MAP 331, every MS 130 receiving the DL-MAP 331 needs to decode the associated PHY burst 330 , check the GMH in the MAC PDU 335, and then decide if the MAC PDU belongs to that MS 130. This leads to significant processing overhead at a MS 130, even if the burst is not intended for that MS 130. So, in practice the CID is also included in DL MAP 331 of each DL burst 330. Consequently, the complete CID is included in both the DL Map 331 and each of the MAC PDUs 335, 336 and such duplicated information increases system overhead and reduces the throughput of the system.

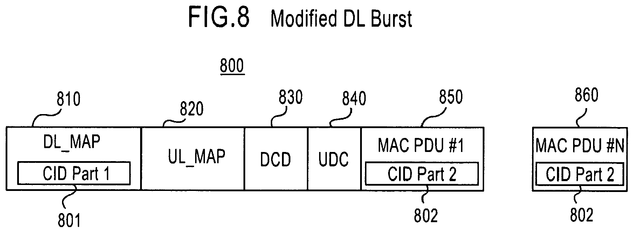

Referring now to FIG 8, a modified DL burst 800 is presented. In order to optimize a GMH to reduce overhead, in one embodiment, the modified DL burst 800 is configured to transport a CID that is split into two parts, CID part 1 801 and CID part 2 802. CID part 1 801 is generally included in the DL-MAP 810 for the resource allocation. UL_Map 820is similar to corresponding element in FIG. 3, presented above. The CID part 2 802 is included in the GMH of a MAC PDU 850 that uses the resource allocation. In this way, after receiving a DL-MAP with CID part 1, only a small number of MS 130 whose CID match the CID part 1 801 included in the DL-MAP. Only these matching MS 130 will then need to decode the rest of the PHY burst 800 and check the CID part 2 802 in the MAC PDU 850. In the best case, only the target MS 130 needs to check the MAC PDU 850 because CID part 1 801 of the target MS 130 does not coincide, or collide, with the CID part 1 801 of any other MS 130. When multiple MS 130 share the same CID part 1 801 as contained in the DL MAP 810, these initially matching MS 130 will access the CID part 2 802 in the MAC PDU 850, combine the CID part 1 801 with the CID part 2 801 received in the GMH of MAC PDU, and then evaluate the complete CID.

For example, in one implementation, the two byte CID is divided into a one byte CID part 1 801 and a one byte CID part 2 802. In this way, there is a one byte or 8 bit saving in each of the CIDs fields in the DL_MAP 810 and the headers of the MAC PDUs 850 going to the same CID. Alternatively, the 16 bit CID may be divided into 4 most significant bits (MSB) and 12 least significant bits (LSB), with a 4 bit CID part 1 801 and a 12 bit CID part 2 802. In this way, there is a 12 bit saving in the DL_MAP and a 4 bit saving in each of the headers of the MAC PDUs 850 going to the same CID. Likewise, the 16 bit CID may be divided into a 12 bit CID part 1 801 and a 4 bit CID part 2 802. In this way, there is a 4 bit saving in the DL_MAP and a 12 bit saving in each of the headers of the MAC PDUs 850 going to the same CID.

It should be appreciated that the size of CID part 1 801 and part 2 802 may vary dynamically depending, for example, on the size of the system 100, the nature of the communication, etc. As can be appreciated from the above discussion, increasing the size of the CID part 1 801, decreases the potential number of MS 130 having CIDs that correspond with the CID part 1 801 of the target MS 130, thereby decreasing processing overhead at the MS 130. Accordingly, in one preferred implementation, the size of the CID part 1 be changed by BS 120 on frame by frame basis or DL_MAP-IE by DL_MAP-IE basis, based on e.g., collision possibility.

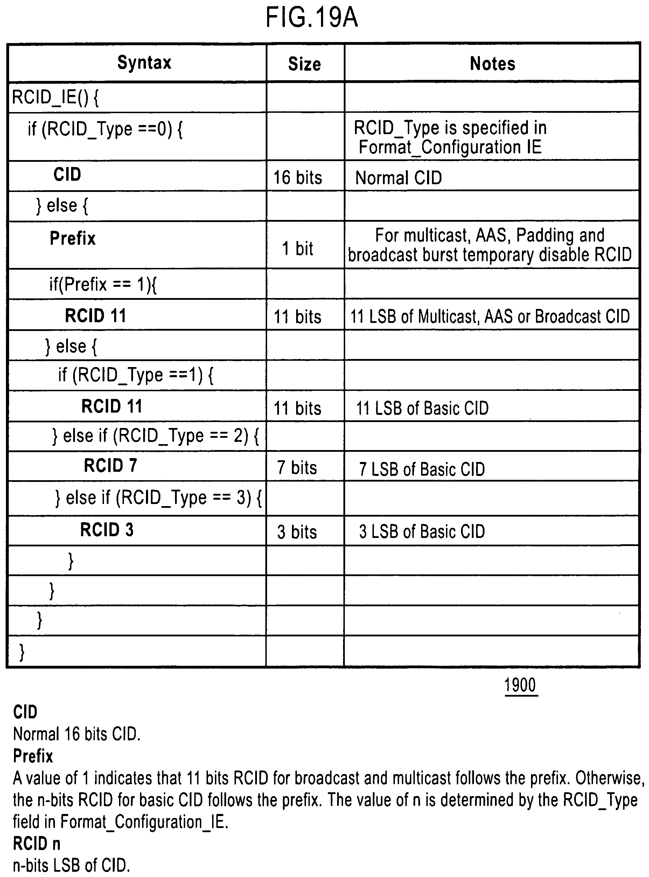

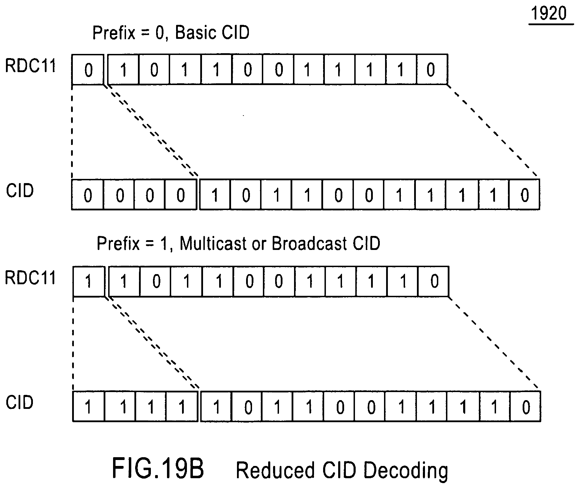

In another embodiment, the CID part 1 801 may be formed as a RCID, with the CID part 2 802 being defined as the remaining portion of the original CID. As described above, the BS 120 may use RCID instead of basic CID or multicast CID to reduce the size of a HARQ MAP message. The RCID type is determined by BS 120 considering the range of basic CIDs of MS 130 connected with the BS 120 and specified by the RCID Type field of the Format Configuration IE. Different types of RCID include RCID 11, RCID 7, and RCID 3. For more information on RCID, please refer to 802.16 specification section 6.3.2.3.43.3, the subject matter of which is hereby incorporated by reference in full. For example, FIG. 19A depicts a process 1900 for forming an RCID, and FIG. 19B depicts an exemplary RCID 1920.

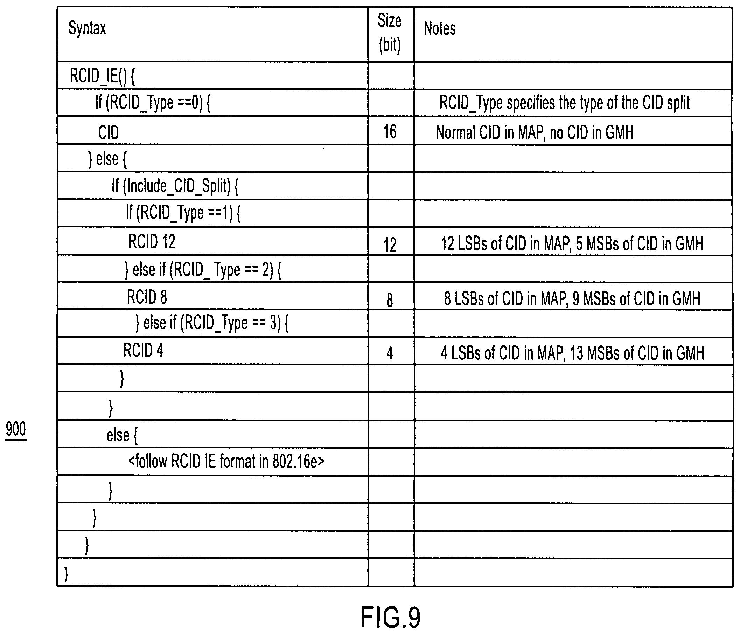

For example, referring to Fig. 9, the standard routine RCID_IE() 900 can be used in MAP messages to represent CID part 1 and the length of CID part 2 can be derived accordingly. Either CID part 1 or CID part 2 can be NULL and therefore either part may represent the full CID. If the size of CID part 1 = 16, then no CID needs to be included in the GMH 600 of the MAC PDU 500. The BS 120 decides the size of CID part 1 and 2, and informs MS using indications in the DL MAP IE, or using RCID_IE or using a CID Split Indication IE to indicate the change to the subsequent DL MAP IEs.

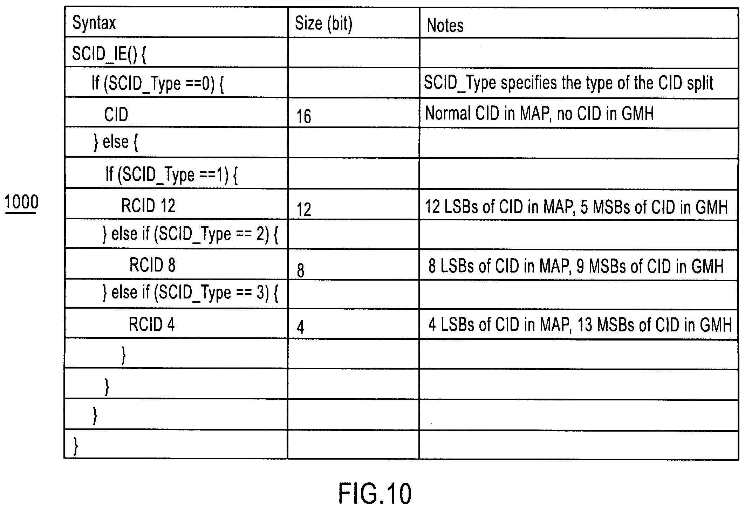

Fig. 10, a SCID_IE() 1000 can be used in MAP messages to represent CID part 1 and therefore length of CID part 2 can be derived accordingly. In the modified routine SCID_IE() 1000, split CID (SCID) type specifies the type of the CID split. For example, if SCID_Type is "0", then 16 bit CID is used in MAP, no CID in GMH, if SCID_Type is "1", then 12 LSBs of CID is used in MAP and 4 MSBs of CID in GMH, if SCID-Type is 2, then 8 MSBs of CID is used in MAP and 8 bits of MSBs of CID is used in GMH, and if RCID_Type is 3, 4 LSBs of CID is used in MAP and 12 MSBs of CID is used in GMH.

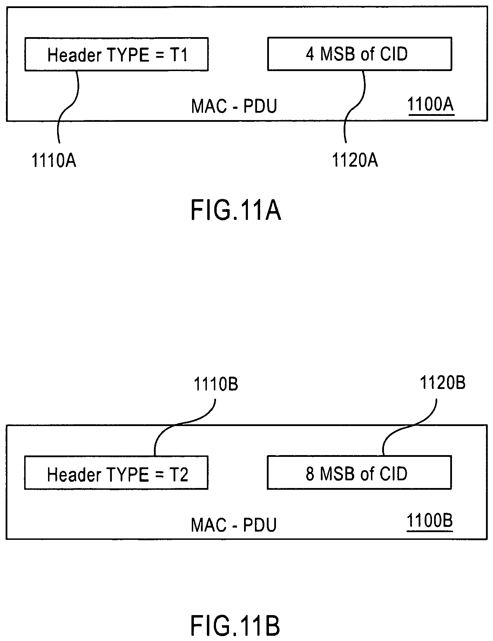

Further, since the length of CID part 1 and CID part 2 are variable, it may have impact on the MAC Header format. Therefore different MAC Header formats can be defined as illustrated in another embodiment of the invention. As depicted in FIGS. 11a and 11b, the length of CID part 1 in the MAP can be used to indicate the type of MAC Header format used for GMH in the transmitted burst. Referring to the exemplary modified MAC PDU 1100a of FIG. 10a, if RCID 12 is used in MAP, then the MAC header type 1110a will be a type 1 (T1), which indicates that a CID 1120a of 4 MSBs will be contained in the MAC header. Alternatively, referring to the exemplary modified MAC PDU 1100b of FIG. 10b, if RCID 8 is used in MAP, then the MAC header type 1110b is type (T2) which indicates that the CID 1120B of 8 MSBs will be included in MAC header.

In one embodiment, when HARQ is enabled as described, the BS 120 preferably adjusts the size of CID part 1 and 2, respectively 801 and 802, so that the CID part 1 801 of the target MS 130 doesn't collide with that the CID part 1 801 for other MS 130. As described above, HARQ generally entails transmitted multiple blocks using error detection and correction to obtain more reliable high-speed data downlink from the BS 120 to a desired MS 130. If CID part 1 in the HARQ control signal (as defined by the routine HARQ-DL-MAP-IE) collides with the CID part 1 801 for multiple MS 130, then all those unintended MS 130 will receive the PHY burst. The unintended MS 130 will be unable to receive and decode the burst correctly, but the unintended MS 130 do not know if HARQ burst is really meant for them because the second CID part 2 802 cannot be recovered. The unintended MS 130 therefore will send a negative-acknowledge character (NAK), a transmission control character sent as a negative response to the BS 120 to indicate that an error was detected in the previously received block and that the MS 130 is ready to accept retransmission of that block from the MS 130. However, the MS 130 for which this burst was really intended is generally able to receive and decode the encoded communication, and the intended MS 130 will send an acknowledge character (ACK) which may collide with the NAK from the other MS 130. The BS 120 may be confused by the conflicting messages. Therefore, CID part 1 801 is preferably unique in the HARQ control signals (HARQ-Map-IE) in order to avoid the above described ACK/NAK collisions.

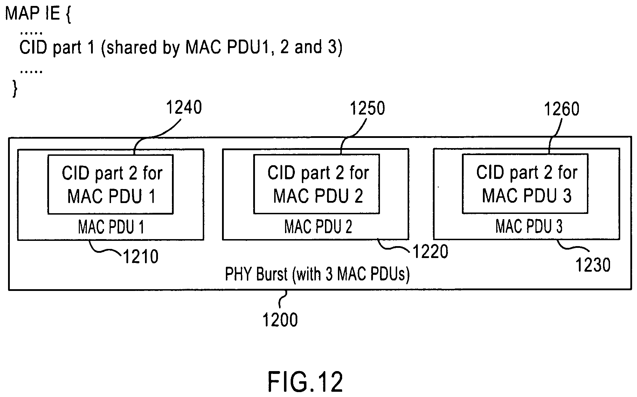

Another embodiment of the invention is illustrated in FIG 12. In FIG. 12, an exemplary burst 1200 includes multiple MAC PDUs 1210, 1220, and 1230 having different distinct CIDs. For example, the multiple MAC PDUs 1210, 1220, and 1230 may be for different service flow or management flow of a same MS 130 and are packed into the single PHY burst 1200. In this instance, the BS 120 may assign three distinct CIDs for the MS 130 in the way that these CIDs share the same CID part 1. With such type of assignment, CID part 1 801 is shared by multiple connections for the MS 130 and is included in the MAP, while the different CID part 2 1240, 1250, and 1260 are included in associated MAC PDU 1210, 1220, and 1230 in the PHY burst 1200.

Referring back to FIG. 6, it can be seen that the GMH 600 typically includes the type field 620. The 6-bit Type field 620 in the GMH 600 of a MAC PDU denotes sub-header types as defined above in Table 1, and these sub headers are used to implement the signalling necessary for the fragmentation, packing, ARQ and mesh features of the MAC. However, most of the time, a large number of transmissions may not require the presence of those sub-headers, and therefore, it produces further unnecessary overhead in the GMH 600 since multiple bits in the 6 bit Type field 620 are generally unused.

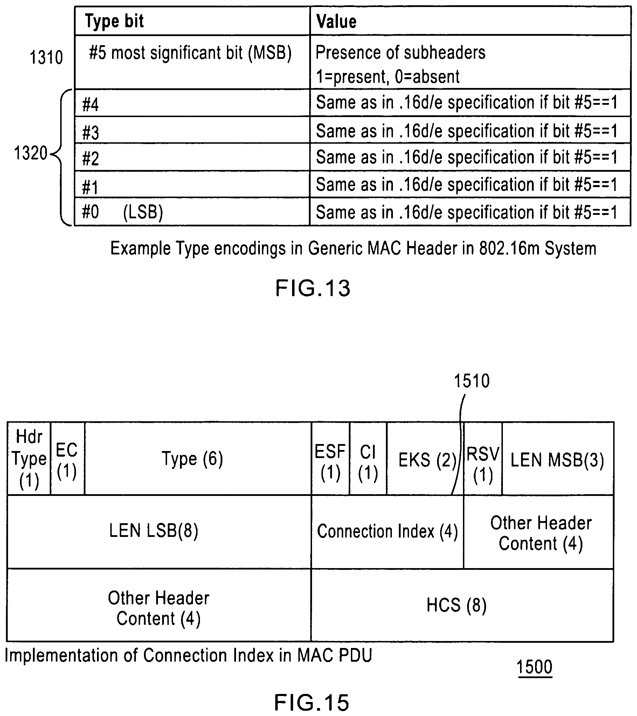

In response to this and other problems, yet other embodiment of the invention includes minimizing the length of the type field 620 when unneeded. For example, as illustrated in Table 1300 of FIG. 13, the MSB bit 1310 in the GMH Type field 620, typically the current mesh sub-header bit, may be used to indicate whether there is any sub-header present in the GMH 600. If this MSB bit 1310 equals 1, thereby indicating the presence of sub-headers after GMH 600, then the GMH Type field 620 may use, the Type encoding defined in 802.16e/d for the 5 LSB 1320 to indicate the presence of and types of sub-headers. If the MSB 1310 equals 0, thereby indicating that sub-headers are not present after GMH 600, the 5 other bits 1320 in the Type field 620 can be used for other purposes which are beyond the scope of the present description, such as carrying data or free header capacity for other applications.

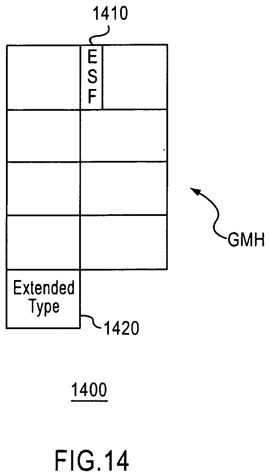

Referring now to the modified GMH 1400 in FIG. 14, alternatively, the MSB 1310 from the type field 620 or another field may be used to indicate the presence of an Extended Type sub-headers 1420 after the GMH 600. In this implementation, when this Extended Type sub-header 1420 indicates the presence of other sub-header in the MAC PDU. For example, an 8 bit extended type field 1420 may be used to identify additional sub-header types as described above in Table 1. In this implementation, the 6 bit type field 620 or the remaining 5 bit in the type field 620 may be released to be used for other purposes such as carrying data or providing additional header capacity for other applications.

As described above in FIGS. 3 and 4 and the related text, for each uplink allocation for a MS 130 in an 802.16 system, the basic CID of the MS 130 is included in the UL-MAP 332, and the transport CID for the transmitted service flow is included in the GMH 600 in the MAC PDU 500. Likewise, for each downlink allocation for a MS 130 in an 802.16 system, the basic CID or the transport CID for the MS 130 may be included in the DL-MAP 331, and the transport CID for the transmitted service flow is included in the GMH 600 in the MAC PDU 500. This configuration of transmitting the CIDs also applies to the scenarios where multiple MAC PDUs 335, 336 for the MS 130 are packed into a single PHY burst 330. In this case, a GMH 600 is attached to every MAC PDU 335, 336 included in the PHY burst. In particular, the 802.16 systems currently use a flat structure of CID space to manage the connections, which again produces unnecessary system overhead. For example, for a single transmission, at least two CIDs (basic and transport) that require at least 32 bits are used for a given MS 130, even though the basic and transport CIDs may be expressed in much less space.

To address this and other problems in the current 802.16 systems, according to another embodiment, the existing flat connection management scheme in 802.16d/e is improved to a hierarchical connection management scheme by introducing Connection Index. Each MS is assigned with a basic CID. For every other connection established for the basic/primary/secondary connection or service flow, a connection index is assigned instead. The basic/primary/secondary connections could be automatically assigned with pre-defined Connection Index values. Considering that the number of connections supported by a single MS 130 is significantly smaller than the total number of connections to be supported by a BS 120, the number of Connection Indices could be significantly smaller than the normal CID. Therefore, the number of Connection Indices can be represented with less number of bits, for example only 4 bits, rather than 16 bits used for a CID.

With this approach, during a connection setup procedure, such as Dynamic Service Add (DSA) procedure, a Connection Index is assigned to a new connection associated with the service flow parameter. As depicted in FIG. 15, the GMH 1500 of MAC PDU 500 is changed as follows. For each allocation, the UL_MAP that specifies the allocation shall include the basic CID of the MS 130. In the exemplary modified GMH 1500 of MAC PDU, a 4-bit Connection Index 1510 for the service flow or basic/primary/secondary connection is included instead of a 16-bit CID 660. It should be appreciated however, that the connection index 1510 may be sized as needed to represent the number of available connections at the BS 120. The difference between the size of the CID field 660 and the Connection Index 1510, 12 bits in this case, may be released to perform other functions, such as carrying data or performing other header functions.

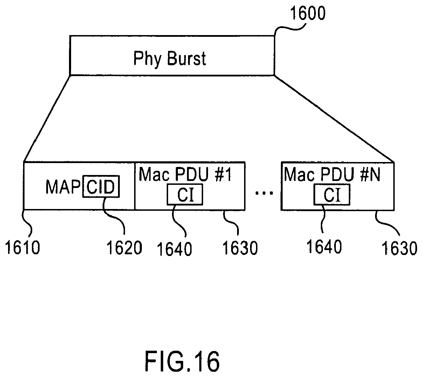

As depicted in FIG. 16, with this approach, the bandwidth savings is more significant when multiple MAC PDUs 1630 for a single MS 130 or BS 120 are packed inside a single PHY burst 1600, because only one CID 1620 is included in the MAP 1610, and all the MAC PDUs 1630 in the PHY burst 1600 are identified by Connection Indices 1640 that have smaller length.

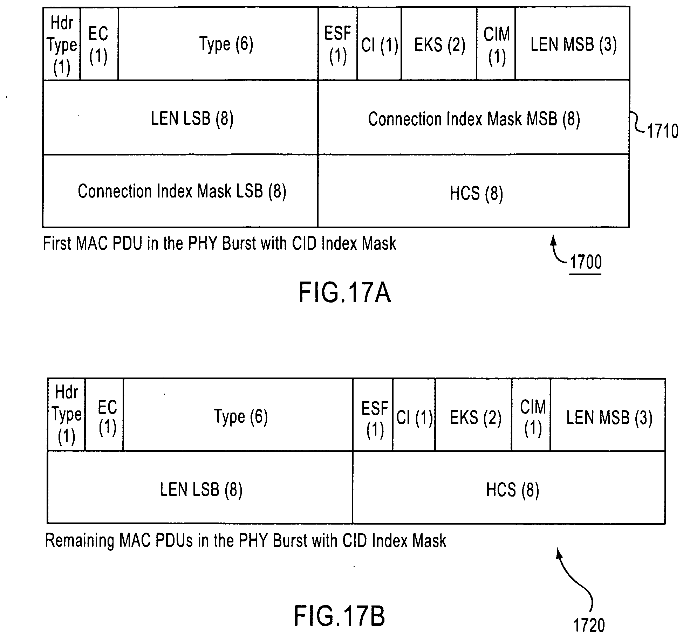

Referring now to FIGS. 17a and 17b, in the case that the number of MAC PDUs in the PHY burst to a single user is large as defined below, e.g., more than four MAC PDUs 4 when the size of CID index is four, a CID index mask 1710 may be included in the first MAC PDU 1700, as shown in FIG. 17a, and neither CID index nor CID is included in any other subsequent MAC PDUs 1720, as shown in FIG. 17b. The size of the CID index mask 1710 is the maximum number of connections to be supported by a single MS 130, such as 16 bits. Then, the value of the n-th bit in the CID index mask 1710 indicates the presence of the MAC PDU with the CID index of value n. The MAC PDUs 1700, 1720 in the burst should be ordered based on increased CID index value.

Referring now to FIG. 7 (Prior Art), the contents of a bandwidth request (BR) header 700 are shown. To request changes to the granted characteristics of a connection, a 6-byte bandwidth request header is transmitted in place of the Generic MAC header. In particular, the BR header 700 generally includes a BR field 710 that indicates the number of uplink bytes of bandwidth being requested.

Continuing with FIG. 7, the rest of the fields in the bandwidth request header 700 are generally similar to the above-described GMH 600. In particular, The HT and encryption control (EC) bits, 720 and 730, are generally set to 1 and 0, respectively. The 6-bit type field 740 can take the value 0 to indicate an incremental bandwidth request or a value of 1 to indicate an aggregate request. The CID field 750 indicates the connection for which the bandwidth request is being made. The HCS field 760 is generally an 8-bit CRC of the first 5 bytes of the bandwidth request header 700.

As described above, since bandwidth request is for an individual connection, the bandwidth request should identify both the MS 130 and the connection.

In one embodiment, a Bandwidth request includes both a basic CID of the MS (to identify the MS) and a Connection Index for the connection (to identify the individual connection).

Alternatively, during the connection set up procedure such as a DSA procedure, in addition to the Connection Index, the transport CID is also assigned. Messages such as bandwidth request sent from MS/SS uses transport CID in the CID field 750 as depicted in FIG. 7, while the GMH 1500 of the MAC PDUs uses the Connection Index 1510.

In another possible solution, N most significant bits of the CID may be combined with the connection index. For example where the 12 most significant bits of the CID are used, the first 12 most significant bits of the basic CID and a 4-bit Connection Index may be combined together to form a transport CID for a connection. It should be appreciated, that any number N may be chosen, depending on the needs of the network and the communications. Referring to FIG. 7, the 16-bit transport CID formed with such procedure may be used in the CID field 750. The transport CID formed with such procedure should be unique within the BS 120 and should not collide with any other CIDs.

While messages, such as bandwidth request sent from MS 130, use transport CID, the GMH 1500 of MAC PDU may use the Connection Index 1510, as described above in FIG. 15. Then, the basic CID or just the N most significant bits of the basic CID may be included in the MAP IE 1610, as depicted in FIG. 16. As described above, the BS 120 should check the record of CIDs to verify that the N most significant bits of the basic CID of the MS 130 does not collide with that for another MS 130. For example, the 12 most significant bits of the basic CID may be included in the MAP IE 1610, and the BS 120 may check the record of CIDs to verify that the 12 most significant bits of the basic CID of the desired MS 130 does not collide with that for another MS 130.

In this way, it can be seen that embodiments of the present invention may be used individually or in combination to provide significant reductions in header overhead in comparison to conventional 802.16 systems.

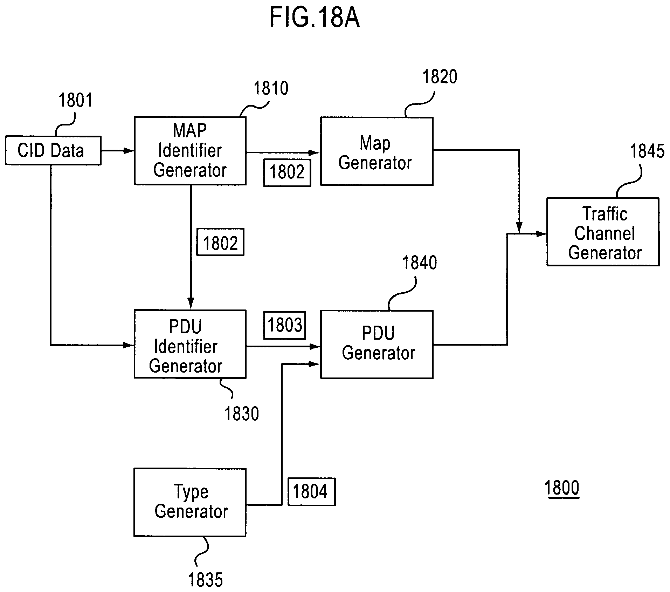

Referring now to FIGS. 18A, one embodiment of the present invention provides a base station (BS) 1800 and a mobile station (MS) 1850 for decreasing system overhead by reducing the size of packet headers and/or control information, as generally described above, in a downlink transmission between the BS 1800 and the MS 1850. The BS 1800 generally includes an MAP identifier generator 1810 that uses CID data 1801 to provide an MAP identifier 1802 to a MAP generator 1820 that generates control information of the UL-MAP and DL-MAP.

As described above, the MAP identifier 1802 may be CID part 1. For example, the MAP identifier generator 1810 may use one of the RCID IE/SCID IE routines described herein to shorten the CID 1801. Alternatively, the CID 1801 may be shortened to a connection index or a CID index mask, where appropriate, depending on nature of the connection. When forming the CID part 1, the MAP identifier generator 1810 may perform a check with other stored CIDs to minimize collisions.

The BS 1800 further includes a PDU identifier generator 1830 that uses the CID data 1801 and the MAP identifier 1802 to form a PDU identifier 1803 to a PDU generator 1840. For example, PDU identifier generator 1830 may receive the CID part 1 and the CID and uses this information to form an appropriate CID part 2. Alternatively, the CID 1801 may be shortened to a connection index or a CID index mask, where appropriate, depending on the MAP identifier 1802. The PDU generator 1840 then uses the CID part 2 to form the MAC PDUs in the DL data.

A type field generator 1835 further provides type field instructions 1804 to the PDU generator 1840. As described above, the type field generator 1835 may indicate whether the type field is necessary. Depending on this information, the PDU generator may elect to populate the type field, to remove/shorten the type field/ or to add a sub-header field with the type data.

A traffic channel generator 1845 then combines the output from the MAP generator 1820 and the PDU generator 1840 and forwards this result to the MS 1850.

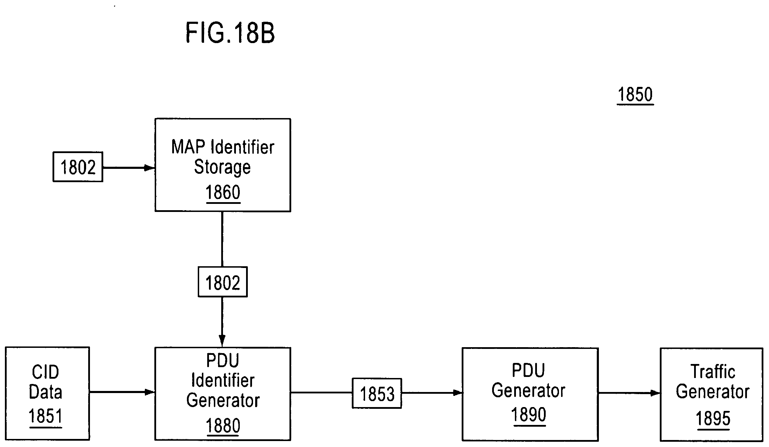

Referring now to FIGS. 18B, another embodiment of the present invention provides the MS 1850 for decreasing system overhead, as generally described above, in a uplink transmission from the MS 1850 to the BS 1800. The MS 1850 generally includes a MAP identifier storage 1860 that stores the map identifier 1802 received from the BS 1800. As described above, the MAP identifier 1802 may be CID part 1.

The MS 1850 further includes a PDU identifier generator 1880 that uses CID data 1851 and stored MAP identifier 1802 to form a PDU identifier 1853 to a PDU generator 1890 that form UL data. For example, PDU identifier generator 1880 may receive the stored CID part 1 1802 and the CID data 1851 and uses this information to form an appropriate CID part 2 1853. Alternatively, the CID 1851 may be shortened to a connection index or a CID index mask, where appropriate, depending on the MAP identifier 1802.

A traffic channel generator 1895 then combines the output from the PDU generator 1890 and forwards this result to the BS 1800.

If the MS 1850 is sending a BR message to the BS 1800, the PDU identifier generator 1890 may includes both the basic CID of the MS and a Connection Index. Alternatively, if a transport CID is also assigned by the BS 1800, the PDU identifier generator 1890 uses the transport CID in the BR message and a Connection Index in later MAC PDUs. In another possible solution, several significant bits of the CID may be combined with the connection index.

The foregoing description of the preferred embodiments of the invention has been presented for the purposes of illustration and description. It is intended that the scope of the invention be limited not by this detailed description, but rather by the claims appended hereto. In particular, it should be noted that although the above description particularly references the 802.16 standards and communication systems, it should be appreciated that the teachings contained here are also applicable to types of packet-based communications. The above specification, examples and data provide a complete description of the manufacture and use of the composition of the invention.

## Claims

1. A base station (120) configured to implement a modified frame in a wireless communication system, the modified frame comprising:
a map IE (810, 820, 1610) that comprises first address information (801) derived from a first connection identifier, CID; and
a first Media Access Control Packet Data Unit, MAC PDU (850), comprising a first header, **characterized in that** said first header comprises second address information (802) derived from the first CID and said first address information (801), and **in that** the size of said first address information (801) is changeable on frame by frame basis.

2. The base station (120) of claim 1, the modified frame further comprising:
a second MAC PDU (860) comprising a second header, wherein said second header comprises third address information derived from a second CID and said first address information (801).

3. The base station (120) of claim 1, wherein said map (810, 820, 1610) comprises a Hybrid Automatic Repeat Request, HARQ, message, and wherein said first address information (801) uniquely identifies an intended mobile station (130).

4. A mobile station (130) configured to implement a modified frame in a wireless communication system, the modified frame comprising:
a map IE (810, 820, 1610) that comprises first address information (801) derived from a first connection identifier, CID; and
a first Media Access Control Packet Data Unit, MAC PDU (850), comprising a first header, **characterized in that** said first header comprises second address information (802) derived from the first CID and said first address information (801), and **in that** the size of said first address information (801) is changeable on frame by frame basis.

5. The mobile station (130) of claim 4, the modified frame further comprising:
a second MAC PDU (860) comprising a second header, wherein said second header comprises third address information derived from a second CID and said first address information (801).

6. The mobile station (130) of claim 4, wherein said map (810, 820, 1610) comprises a Hybrid Automatic Repeat Request, HARQ, message, and wherein said first address information (801) uniquely identifies an intended mobile station (130).

## Patentansprüche

1. Basisstation (120), die dazu eingerichtet ist, ein modifiziertes Frame in einem drahtlosen Kommunikationssystem zu implementieren, wobei das modifizierte Frame umfasst:
eine Map IE (810, 820, 1610), die eine erste Adressinformation (801) umfasst, die von einem ersten Verbindungs-Identifizierer, CID, abgeleitet ist; und
eine erste Media Access Control Packet Data Unit, MAC PDU (850), die einen ersten Header umfasst,
**dadurch gekennzeichnet, dass**
der erste Header eine zweite Adressinformation (802) umfasst, die von dem ersten CID und der ersten Adressinformation (801) abgeleitet ist, und dass die Größe der ersten Adressinformation (801) auf Frame-zu-Frame-Basis änderbar ist.

2. Basisstation (120) nach Anspruch 1, wobei das modifizierte Frame ferner umfasst:
eine zweite MAC PDU (860), die einen zweiten Header umfasst, wobei der zweite Header eine dritte Adressinformation umfasst, die von einem zweiten CID und der ersten Adressinformation (801) abgeleitet ist.

3. Basisstation (120) nach Anspruch 1, wobei die Map (810, 820, 1610) eine Hybrid Automatic Repeat Request, HARQ, -Nachricht umfasst, und wobei die erste Adressinformation (801) eindeutig eine vorgesehene mobile Station (130) identifiziert.

4. Mobile Station (130), die dazu eingerichtet ist, ein modifiziertes Frame in einem drahtlosen Kommunikationssystem zu implementieren, wobei das modifizierte Frame umfasst:
eine Map IE (810, 820, 1610), die eine erste Adressinformation (801) umfasst, die von einem ersten Verbindungs-Identifizierer, CID, abgeleitet ist; und
eine erste Media Access Control Packet Data Unit, MAC PDU (850), die einen ersten Header umfasst,
**dadurch gekennzeichnet, dass**
der erste Header eine zweite Adressinformation (802) umfasst, die von dem ersten CID und der ersten Adressinformation (801) abgeleitet ist, und dass die Größe der ersten Adressinformation (801) auf Frame-zu-Frame-Basis änderbar ist.

5. Mobile Station (13) nach Anspruch 4, wobei das modifizierte Frame ferner umfasst:
eine zweite MAC PDU (860), die einen zweiten Header umfasst, wobei der zweite Header eine dritte Adressinformation umfasst, die von einem zweiten CID und der ersten Adressinformation (801) abgeleitet ist.

6. Mobile Station (13) nach Anspruch 4, wobei die Map (810, 820, 1610) eine Hybrid Automatic Repeat Request, HARQ, -Nachricht umfasst, und wobei die erste Adressinformation (801) eindeutig eine vorgesehene mobile Station (130) identifiziert.

## Revendications

1. Station de base (120) configurée pour mettre en oeuvre une trame modifiée dans un système de communication sans fil, la trame modifiée comprenant :
une carte IE (810, 820, 1610) qui comprend des premières informations d'adresse (801) dérivées d'un premier identifiant de connexion, CID; et
une première unité de données par paquets de contrôle d'accès au support, MAC PDU (850), comprenant un premier en-tête, **caractérisée en ce que** ledit premier en-tête comprend des deuxièmes informations d'adresse (802) dérivées du premier CID et desdites premières informations d'adresse (801), et **en ce que** la taille desdites premières informations d'adresse (801) est modifiable sur une base trame par trame.

2. Station de base (120) selon la revendication 1, la trame modifiée comprenant en outre :
un deuxième MAC PDU (860) comprenant un deuxième en-tête, dans laquelle ledit deuxième en-tête comprend des troisièmes informations d'adresse dérivées d'un deuxième CID et desdites premières informations d'adresse (801).

3. Station de base (120) selon la revendication 1, dans laquelle ladite carte (810, 820, 1610) comprend un message de requête automatique de répétition hybride, HARQ, et dans laquelle lesdites premières informations d'adresse (801) identifient uniquement une station mobile prévue (130).

4. Station mobile (130) configurée pour mettre en oeuvre une trame modifiée dans un système de communication sans fil, la trame modifiée comprenant :
une carte IE (810, 820, 1610) qui comprend des premières informations d'adresse (801) dérivées d'un premier identifiant de connexion, CID; et
une première unité de données par paquets de contrôle d'accès au support, MAC PDU (850), comprenant un premier en-tête, **caractérisée en ce que** ledit premier en-tête comprend des deuxièmes informations d'dresse (802) dérivées du premier CID et desdites premières informations d'adresse (801), et **en ce que** la taille desdites premières informations d'adresse (801) est modifiable sur une base trame par trame.

5. Station mobile (130) selon la revendication 4, la trame modifiée comprenant en outre :
un deuxième MAC PDU (860) comprenant un deuxième en-tête, dans laquelle ledit deuxième en-tête comprend des troisièmes informations d'adresse dérivées d'un deuxième CID et desdites premières informations d'adresse (801).

6. Station mobile (130) selon la revendication 4, dans laquelle ladite carte (810, 820, 1610) comprend un message de requête automatique de répétition hybride, HARQ, et dans laquelle lesdites premières informations d'adresse (801) identifient uniquement une station mobile prévue (130).
